# EUROPEAN PATENT SPECIFICATION

(11) **EP 3 595 413 B1**
(45) Date of publication and mention of the grant of the patent: **18.10.2023**
(21) Application number: 19185437.1
(22) Date of filing: 10.07.2019
(51) Int. Cl.: H02M 1/32

(54) **CONSTANT CURRENT LED POWER SUPPLY CIRCUIT WITH MAXIMUM OUTPUT POWER LIMITING CIRCUIT**
KONSTANTSTROM-LED-STROMVERSORGUNGSSCHALTUNG MIT MAXIMALER AUSGANGSLEISTUNGSBEGRENZUNGSSCHALTUNG
CIRCUIT D'ALIMENTATION À COURANT CONSTANT À DEL COMPORTANT UN CIRCUIT DE LIMITATION DE LA PUISSANCE DE SORTIE MAXIMALE

(30) Priority: 10.07.2018 CN 201810751111
(43) Date of publication of application: 15.01.2020
(73) Proprietor: Self Electronics Co., Ltd., Ningbo 315103 (CN); SELF ELECTRONICS Germany GmbH, 51149 Köln (DE); Lin, Wanjiong, Ningbo 315103 (CN)
(72) Inventor: WANG, Qiming, Ningbo, 315103 (CN)
(74) Representative: 2K Patentanwälte Blasberg Kewitz & Reichel

(56) References cited:
- EP-A2- 2 782 238
- CN-A- 107 896 402
- US-B1- 9 674 908

## Description

### RELATED APPLICATION

This application claims priority to a Chinese Patent Application No. CN 201810751111.4, filed on July 10, 2018.

### FIELD OF THE TECHNOLOGY

The present invention relates to LED power supply, with particular emphasis on a constant current LED power supply circuit with maximum output power limiting circuit.

### BACKGROUND OF THE INVENTION

At present, the circuit structure of the constant current LED power supply on the market mainly adopts the mode of single-stage constant voltage circuit in the front stage and DC-DC step-down circuit in the rear stage. The constant current LED power supply adopting this circuit architecture has the characteristics of simple circuit, high cost performance and high efficiency, so that the LED power supply adopting such a circuit structure is relatively popular in the market.

However, in this circuit structure, the DC output ripple of a single-stage constant voltage power supply is relatively large, and the DC-DC step-down circuit itself also requires a certain voltage difference. Therefore, the voltage difference between the input and output of the DC-DC circuit in the constant current LED power supply will be relatively large, usually greater than 5V. If you want to improve the efficiency of the single-stage power supply in the front stage, the output voltage of the front-end power supply will be increased, resulting in a larger voltage difference between the input and output of the DC-DC step-down circuit.
EP2782238A2 discloses a power supply circuit including a DC-DC converter and an overcurrent protection unit. The DC-DC converter converts a first DC voltage into a second DC voltage and supplies the voltage to a DC load. The overcurrent protection unit performs feedback control of the DC-DC converter based on current which flows through the DC load. The DC-DC converter includes a normally-on type switching element. The switching element includes a first electrode, a second electrode, and a third electrode for controlling current which flows between the first electrode and the second electrode, and includes a first state, and a second state where the current which flows between the first electrode and the second electrode is smaller than that of the first state. The overcurrent protection unit sets the switching element in the second sate, when the current which flows through the DC load is larger than a reference value.
US9674908B1 discloses a secondary-side bucking and current-stabilizing flyback power converter adopting a dual-stage isolated circuit architecture and outputting a constant output current to drive a low-power LED module, and its primary stage adopts a flyback circuit architecture with a primary regulated voltage, and its secondary stage adopts of a buck circuit architecture of the current stabilizer, so that after the primary stage converts the constant voltage, the current stabilizer senses the load effect of the output current at the LED module to regulate the output cycle and maintain the total output of the output current constant and reduce the ripple amplitude, so as to achieve a non-strobe output result and improve the illumination effect of the LED module.
CN107896402A discloses an LED lamp of a constant-current dimming driving circuit based on PWM input. The LED lamp comprises a PWM variable power input end, a PWM matching circuit, a voltage rectifying circuit and a DC-DC constant current output circuit and the LED lamp, wherein the voltage signal of the PWM variable power input end is provided by a PWM voltage output power supply, the PWM variable power supply input end is respectively connected with the PWM matching circuit and the voltage rectifying circuit, the PWM matching circuit is connected with the enabling end of the DC-DC constant current output circuit, the voltage rectifying circuit is connected with the power supply end of the DC-DC constant current output circuit, the voltage of the voltage rectifying circuit is changed along with the change of the duty ratio of the voltage of the PWM variable power input end, the voltage of the PWM variable power input end outputs a PWM control signal via divider resistor of the PWM matching circuit, and the PWM control signal passes through the DC-DC constant current output circuit to realize the LED lamp without stroboflash adjustment.

However, if you increase the voltage difference between the DC-DC input and output, there will be many negative problems. For example, a constant current LED power supply is required to increase the load power to the maximum during abnormal test to perform overload test. Since the input power of the constant current LED power supply during the overload test will greatly exceed the rated power, the temperature of the components in the constant current LED power supply will rise so much that the maximum temperature value required by the component in the test standard is exceeded, as a result, the constant current LED power supply with this circuit structure cannot pass the overload test standard.

### BRIEF SUMMARY OF THE INVENTION

The first technical problem to be solved by the present invention is to provide a maximum output power limiting circuit of constant current LED power supply for the above prior art.

A second technical problem to be solved by the present invention is to provide a constant current LED power supply circuit for the above prior art.

The technical solution adopted by the present invention to solve the above first technical problem is a constant current LED power supply circuit according to claim 1.
advantageously, the voltage stabilizing source circuit for setting the DC-DC output current includes a first resistor, a second resistor, a third resistor, a first capacitor, a second capacitor, and a first voltage stabilizing integrated block; The first end of the first resistor is connected to the output end of the single-stage constant voltage power supply circuit and the input end of the DC-DC constant current output circuit. The second end of the first resistor is respectively connected to the first end of the second resistor, the first end of the second capacitor and the cathode of the first voltage stabilizing integrated block, and the second end of the first resistor is used to connect the voltage stabilizing input end of the DC-DC constant current output circuit; The first end of the second resistor is connected to the first end of the first capacitor, the second end of the second resistor and the second end of the second capacitor are respectively connected to the first end of the third resistor; the anode of the first voltage stabilizing integrated block and the second end of the third resistor is respectively connected to the internal grounding end of the voltage stabilizing source circuit.
advantageously, the third diode is a zener diode.
advantageously, a first end of a first resistor of the limiting circuit is respectively connected to the output end of the single-stage constant voltage power supply circuit and the input end of the DC-DC constant current output circuit; a second end of the first resistor and the cathode of a third diode are respectively connected to the voltage stabilizing input end of the DC-DC constant current output circuit; an output end of the DC-DC constant current output circuit is connected to the first voltage input end of the LED lamp, and the other output end of the DC-DC constant current output circuit is respectively connected to the cathode of a second diode and the second voltage input end of the LED lamp in the limiting circuit.
advantageously, the single-stage constant voltage power supply circuit in this embodiment includes a rectifier bridge, an isolation transformer, and a constant voltage power supply control chip. The first input end of the rectifier bridge is connected to the fire line of the power line through the fuse. the second input end of the rectifier bridge is connected to the null line of the power line, and the first output end and the second output end of the rectifier bridge are respectively connected at two ends of a third capacitor, and the first output end of the rectifier bridge is respectively connected with a fourth capacitor, a fourth resistor, a fifth resistor, a sixth resistor and an input end of the isolation transformer.
advantageously, the other end of the fourth capacitor and the other end of the fourth resistor are respectively connected to the cathode of a fourth diode, and the other end of the sixth resistor is connected to the drain of the first triode, and the other end of the fifth resistor is connected to the grid of the first triode, and the grid of the first triode is connected to one end of the ninth capacitor and the third end of the constant voltage power supply control chip, and the other end of the ninth capacitor is grounded; the anode of the fourth diode is respectively connected to the isolation transformer and the drain of a second triode;
advantageously, the first end of the constant voltage power supply control chip is respectively connected with a sixth capacitor, a seventh capacitor, a seventh resistor and an eighth resistor, and the second end of the constant voltage power supply control chip is respectively connected with a ninth resistor and a tenth resistor, the fourth end of the constant voltage power supply control chip is connected with a twelfth resistor, the fifth end of the constant voltage power supply control chip is grounded, and the sixth end of the constant voltage power supply control chip is connected with a eleventh resistor; the other end of the seventh resistor is connected to the source of the first triode; the eighth resistor is connected to the cathode of a sixth diode, and the ninth resistor is connected to the anode of the sixth diode; The other end of the eleventh resistor is connected to the grid of the second triode, and the other end of the twelfth resistor is connected with the thirteenth resistor and the source of the second triode, respectively. The other end of the thirteenth resistor is grounded;
advantageously, an output end of the isolation transformer is connected to an anode of a fifth diode, a cathode of the fifth diode is connected to a fifth capacitor, and the other end of the fifth capacitor is connected to the internal grounding end of the single-stage constant voltage power supply circuit. And an eighth capacitor is provided in the single-stage constant voltage power supply circuit. One end of the eighth capacitor is grounded, and the other end of the eighth capacitor is connected to the internal grounding end of the single-stage constant voltage power supply circuit.
advantageously, the DC-DC constant current output circuit in this embodiment includes a DC-DC step-down control chip, a third triode, a first inductor, and a seventh diode, a tenth capacitor, a twelfth capacitor, a thirteenth capacitor, a fourteenth resistor, a fifteenth resistor, a sixteenth resistor and a seventeenth resistor.
advantageously, the first end of the tenth capacitor is connected to the cathode of the seventh diode and one end of the sixteenth resistor, and this first end of the tenth capacitor is used to connect the first resistor in the limiting circuit. The second end of the tenth capacitor is connected to the internal grounding end of the DC-DC constant current output circuit;
advantageously, one end of the fourteenth resistor is connected to the voltage stabilizing output end of the voltage stabilizing source circuit, and the other end of the fourteenth resistor is respectively connected to one end of the fifteenth resistor, one end of the twelfth capacitor, and the third end of DC-DC step-down control chip; the other end of the fifteenth resistor, the other end of the twelfth capacitor , and the fourth end of the DC-DC step-down control chip are respectively connected to the internal grounding end of the DC-DC constant current output circuit;
advantageously, the first end of the DC-DC step-down control chip is connected to the cathode of the seventh diode, and the second end of the DC-DC step-down control chip is connected to the other end of the sixteenth resistor, the fifth end of the DC-DC step-down control chip is connected to one end of the seventh resistor, the sixth end of the DC-DC step-down control chip is connected to one end of the thirteenth capacitor, and the other end of the thirteenth capacitor is connected to the internal grounding end of the DC-DC constant current output circuit; the other end of the seventeenth resistor is connected to the grid of the third triode, and the source of the third triode is connected to the internal grounding end of the DC-DC constant current output circuit; One end of the first inductor is connected to one end of the eleventh capacitor, and the other end of the first inductor is connected to the drain of the third triode and the anode of the seventh diode, respectively.

Compared with the prior art, the present invention has advantages in that: in the present invention, by adding a voltage stabilizing source circuit for setting DC-DC output current and an output power limiting circuit to an existing constant current LED power supply circuit, the voltage stabilizing source circuit for setting the DC-DC output current is connected to the output end of the single-stage constant voltage power supply circuit, and the output power limiting circuit is connected to the constant current output end of the DC-DC constant current output circuit, thereby utilizing the clamping function between the two diodes of the output power limiting circuit to pull down the voltage of the voltage stabilizing input end of the voltage stabilizing source circuit, and the voltage of the control end D of the DC-DC constant current output circuit also drops in the same proportion, thus, the DC-DC output current corresponding to the DC-DC constant current output circuit is greatly reduced by utilizing the control end D, which limits the output load power.

### BRIEF DESCRIPTION OF THE DRAWINGS

FIG. 1 is a schematic diagram of a constant current LED power supply circuit in the embodiment;
FIG. 2 is a schematic diagram of a voltage stabilizing source circuit for setting DC-DC output current in the embodiment;
FIG.3 is a schematic diagram of an output power limiting circuit in the embodiment;
FIG. 4 is a schematic diagram of a single-stage constant voltage power supply circuit in the embodiment;
FIG. 5 is a schematic diagram of a DC-DC constant current output circuit in the embodiment.

### DETAILED DESCRIPTION OF THE INVENTION

The present application is illustrated by way of the following detailed description based on of the accompanying drawings. It should be noted that illustration to the embodiment in this application is not intended to limit the invention.

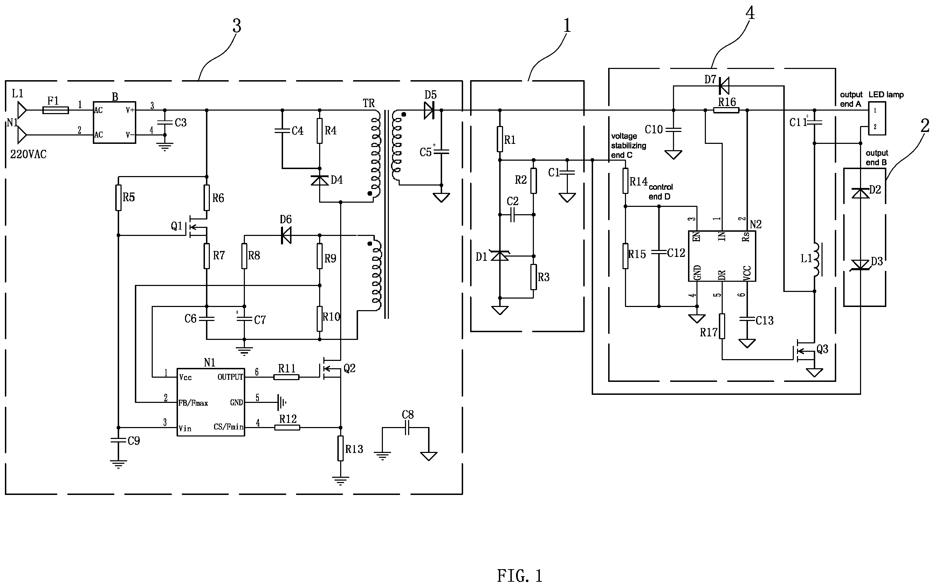

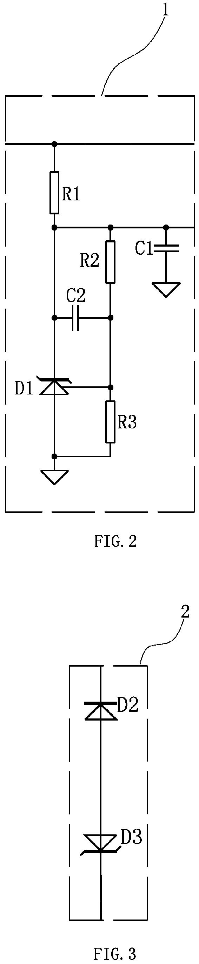

As shown in FIG. 1 to FIG. 3, the maximum output power limiting circuit of constant current LED power supply in the embodiment is used to cooperate with the single-stage constant voltage power supply circuit 3 and the DC-DC constant current output circuit 4 in the constant current LED power supply. The maximum output power limiting circuit of constant current LED power supply includes a voltage stabilizing source circuit 1 for setting DC-DC output current and an output power limiting circuit 2; wherein:
The voltage stabilizing source circuit 1 for setting the DC-DC output current includes a first resistor R1, a second resistor R2, a third resistor R3, a first capacitor C1, a second capacitor C2, and a first voltage stabilizing integrated block D1; The first end of the first resistor R1 is connected to the output end of the single-stage constant voltage power supply circuit 3 and the input end of the DC-DC constant current output circuit 4. The second end of the first resistor R1 is respectively connected to the first end of the second resistor R2, the first end of the second capacitor C2 and the cathode of the first voltage stabilizing integrated block D1, and the second end of the first resistor R1 is used to connect the voltage stabilizing input end of the DC-DC constant current output circuit 4; The first end of the second resistor R2 is connected to the first end of the first capacitor C1, the second end of the second resistor R2 and the second end of the second capacitor C2 are respectively connected to the first end of the third resistor R3; the anode of the first voltage stabilizing integrated block D1 and the second end of the third resistor R3 is respectively connected to the internal grounding end of the voltage stabilizing source circuit;
The output power limiting circuit 2 includes a second diode D2 and a third diode D3; and the third diode D3 is a zener diode; the cathode of the second diode D2 is used to respectively connect the output end of the DC-DC constant current output circuit 4 and the voltage input end of LED lamp; the anode of the second diode D2 is connected to the anode of the third diode D3, and the cathode of the third diode D3 is connected to the first end of the first capacitor C1.

Specifically, in the present embodiment, the output voltage of the single-stage constant voltage power supply circuit 3 is 55V, and the output voltage of the voltage stabilizing source circuit 1 for setting the DC-DC output current is 25V, and the output power of the DC-DC constant current output circuit 4 is 40W. Wherein, the voltage accuracy of the voltage stabilizing source circuit 1 affects the accuracy of the current outputted by the DC-DC constant current output circuit 4.

It should be noted that the second diode D2 in the output power limiting circuit 2 belongs to an isolation diode, and the second diode D2 can isolate the voltage at the output end B from flowing into the voltage stabilizing source circuit 1. The third diode D3 is a zener diode, and the voltage stabilizing value of the third diode D3 can be set to the maximum output power of the constant current LED power supply.

By connecting the limiting circuit in the embodiment to the single-stage constant voltage power supply circuit 3 and the DC-DC constant current output circuit 4 in the constant current LED power supply, the effect of limiting the maximum output power of constant current LED power supply can be achieved.

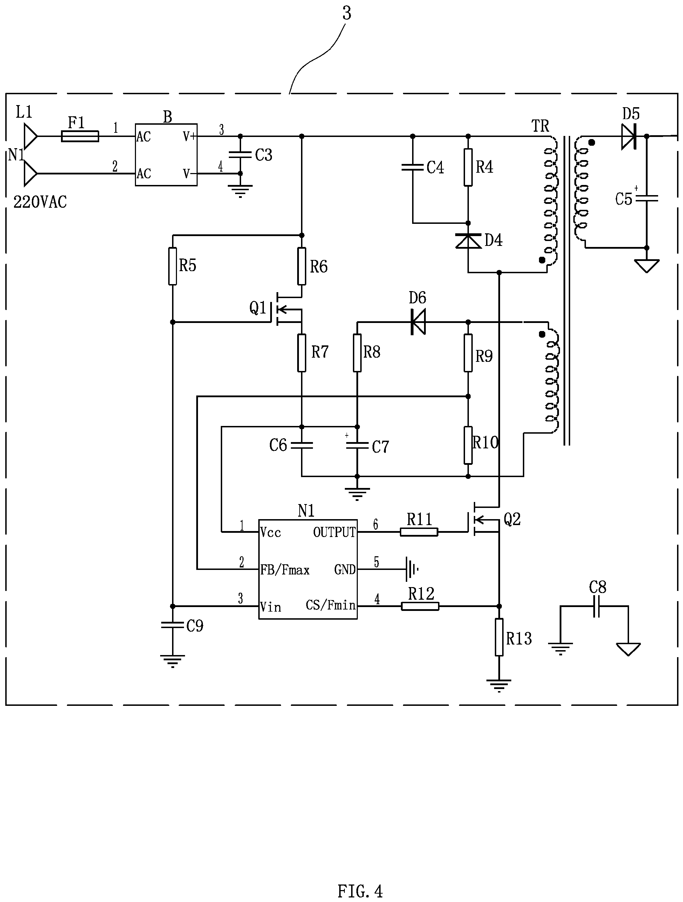

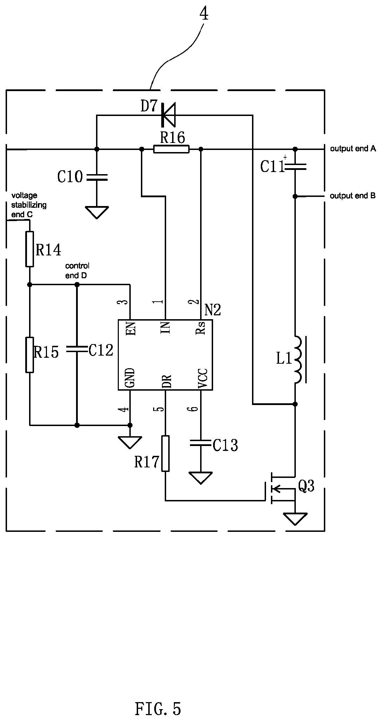

As shown in FIG. 1 to FIG. 5, the embodiment further provides a constant current LED power supply circuit including a single-stage constant voltage power supply circuit 3 and a DC-DC constant current output circuit 4 and the aforementioned maximum output power limiting circuit of constant current LED power supply, wherein the first end of the first resistor R1 of the limiting circuit is respectively connected to the output end of the single-stage constant voltage power supply circuit 3 and the input end of the DC-DC constant current output circuit 4; The second end of the first resistor R1 and the cathode of the third diode D3 are respectively connected to the voltage stabilizing input end of the DC-DC constant current output circuit 4; an output end of the DC-DC constant current output circuit 4 (ie, the output end A in the figure) is connected to the first voltage input end of the LED lamp, and the other output end of the DC-DC constant current output circuit 4 (ie, the output end B in the figure) is respectively connected to the cathode of the second diode D2 and the second voltage input end of the LED lamp in the limiting circuit.

Specifically, the embodiment adopts the following technical solutions for the single-stage constant voltage power supply circuit and the DC-DC constant current output circuit:
For the single-stage constant voltage power supply circuit, the single-stage constant voltage power supply circuit 3 in this embodiment includes a rectifier bridge B, an isolation transformer TR, and a constant voltage power supply control chip N1. The first input end of the rectifier bridge B is connected to the fire line L of the power line through the fuse F. the second input end of the rectifier bridge B is connected to the null line N of the power line, and the first output end and the second output end of the rectifier bridge B are respectively connected at two ends of a third capacitor C3, and the first output end of the rectifier bridge B is respectively connected with a fourth capacitor C4, a fourth resistor R4, a fifth resistor R5, a sixth resistor R6 and an input end of the isolation transformer TR;
The other end of the fourth capacitor C4 and the other end of the fourth resistor R4 are respectively connected to the cathode of a fourth diode D4, and the other end of the sixth resistor R6 is connected to the drain of the first triode Q1, and the other end of the fifth resistor R5 is connected to the grid of the first triode Q1, and the grid of the first triode Q1 is connected to one end of the ninth capacitor C9 and the third end of the constant voltage power supply control chip N1, and the other end of the ninth capacitor C9 is grounded; the anode of the fourth diode D4 is respectively connected to the isolation transformer TR and the drain of a second triode Q2;
The first end of the constant voltage power supply control chip N1 is respectively connected with a sixth capacitor C6, a seventh capacitor C7, a seventh resistor R7 and an eighth resistor R8, and the second end of the constant voltage power supply control chip N1 is respectively connected with a ninth resistor R9 and a tenth resistor R10, the fourth end of the constant voltage power supply control chip N1 is connected with a twelfth resistor R12, the fifth end of the constant voltage power supply control chip N1 is grounded, and the sixth end of the constant voltage power supply control chip N1 is connected with a eleventh resistor R11; the other end of the seventh resistor R7 is connected to the source of the first triode Q1; the eighth resistor R8 is connected to the cathode of a sixth diode D6, and the ninth resistor R9 is connected to the anode of the sixth diode D6; The other end of the eleventh resistor R11 is connected to the grid of the second triode Q2, and the other end of the twelfth resistor R12 is connected with the thirteenth resistor R13 and the source of the second triode Q2, respectively. The other end of the thirteenth resistor R13 is grounded;
An output end of the isolation transformer TR is connected to an anode of a fifth diode D5, a cathode of the fifth diode D5 is connected to a fifth capacitor C5, and the other end of the fifth capacitor C5 is connected to the internal grounding end of the single-stage constant voltage power supply circuit. And an eighth capacitor C8 is provided in the single-stage constant voltage power supply circuit. One end of the eighth capacitor C8 is grounded, and the other end of the eighth capacitor C8 is connected to the internal grounding end of the single-stage constant voltage power supply circuit.
For the DC-DC constant current output circuit, the DC-DC constant current output circuit 4 in this embodiment includes a DC-DC step-down control chip N2, a third triode Q3, a first inductor L1, and a seventh diode D7, a tenth capacitor C10, a twelfth capacitor C12, a thirteenth capacitor C13, a fourteenth resistor R14, a fifteenth resistor R15, a sixteenth resistor R16 and a seventeenth resistor R17;
The first end of the tenth capacitor C10 is connected to the cathode of the seventh diode D7 and one end of the sixteenth resistor R16, and this first end of the tenth capacitor C10 is used to connect the first resistor R1 in the limiting circuit. The second end of the tenth capacitor C10 is connected to the internal grounding end of the DC-DC constant current output circuit;
One end of the fourteenth resistor R14 is connected to the voltage stabilizing output end of the voltage stabilizing source circuit, and the other end of the fourteenth resistor R14 is respectively connected to one end of the fifteenth resistor R15, one end of the twelfth capacitor C12, and the third end of DC-DC step-down control chip N2; the other end of the fifteenth resistor R15, the other end of the twelfth capacitor C12, and the fourth end of the DC-DC step-down control chip N2 are respectively connected to the internal grounding end of the DC-DC constant current output circuit;

The first end of the DC-DC step-down control chip N2 is connected to the cathode of the seventh diode D7, and the second end of the DC-DC step-down control chip N2 is connected to the other end of the sixteenth resistor R16, the fifth end of the DC-DC step-down control chip N2 is connected to one end of the seventh resistor R7, the sixth end of the DC-DC step-down control chip N2 is connected to one end of the thirteenth capacitor C13, and the other end of the thirteenth capacitor C13 is connected to the internal grounding end of the DC-DC constant current output circuit; the other end of the seventeenth resistor R17 is connected to the grid of the third triode Q3, and the source of the third triode Q3 is connected to the internal grounding end of the DC-DC constant current output circuit; One end of the first inductor L1 is connected to one end of the eleventh capacitor C11, and the other end of the first inductor L1 is connected to the drain of the third triode Q3 and the anode of the seventh diode D7, respectively.

Certainly, for the constant current LED power supply circuit, other forms of single-stage constant voltage power supply circuit and DC-DC constant current output circuit can also be adopted to realize the functions of the single-stage constant voltage power supply circuit in this embodiment and the functions of the DC-DC constant current output circuit in this embodiment respectively.

Specifically, in the DC-DC constant current output circuit 4 of the embodiment, the magnitude of the output current corresponding to the constant current output circuit is set by R16, R14, and R15; the operating frequency of the DC-DC is determined by the first inductor L1 .The DC-DC constant current output circuit 4 is a DC-DC conversion circuit.

The following describes the limitation principle of the limiting circuit on the maximum output power of the constant current LED power supply in the present embodiment with reference to FIG. 1 to FIG. 5:
Assume that the output voltage of the single-stage constant voltage power supply circuit 3 is 55V, the output voltage of the voltage stabilizing source circuit 1 for setting the DC-DC output current is 25V, and the rated output power of the DC-DC constant current output circuit 4 is set to be 40V*1A, that is, the output power is 40W; through the above settings, the voltage at the output end B of the DC-DC constant current output circuit 4 can be made to be about 15V:
Case 1: In the case where the limiting circuit is not added to the constant current LED power supply in this embodiment, when the load (ie, the LED lamp) is overloaded to the maximum value, the output power of the DC-DC constant current output circuit 4 is about 55 W (ie, 55V*1A=55W), at this time the output power (55W) of the load exceeds the rated power (15W) by about 1.38 times. Then, at this time, the components in the LED power supply will have a relatively high temperature rise, causing many components in the LED power supply to exceed the maximum temperature value required by the load test standard.
Case 2: In the case where the constant current LED power supply adopts the limiting circuit in this embodiment, it is assumed that the voltage stabilizing value of the third diode D3 is set to 13V, and when the load (ie, the LED lamp) is overloaded, the voltage at the output end B of the DC-DC constant current output circuit 4 is lowered, because the EN terminal of the DC-DC step-down control chip N2 controls the output current of the DC-DC step-down circuit, and the voltage at the EN terminal is high in the case where the peripheral circuit is fixed. Then, the output current of the DC-DC step-down circuit is large; when the voltage at the EN terminal is low, the output current of the DC-DC step-down circuit is small, that is, the voltage level at the EN terminal is proportional to the magnitude of the output current of the DC-DC step-down circuit. For example, when the voltage at the output end B drops to near 0V, the voltage at the voltage stabilizing end C of the voltage stabilizing source circuit 1 is pulled down to 13.5V by the clamping action of the second diode D2 and the third diode D3. (Assuming that the forward voltage drop of the second diode D2 is 0.5V, there is 13V+0.5V=13.5V); at the same time, the voltage at the control end D will also decrease in the same proportion; due to the control end D is the control end of the DC-DC constant current output circuit 4, and the control end D controls the DC-DC output current corresponding to the DC-DC constant current output circuit 4 to drop significantly, thus limiting the output load power and limiting the maximum output power of constant current LED power supply.

According to the test standard of the overload test, the load is usually adjusted to maximize the output power. Therefore, when the load voltage is adjusted to 55V-(25 V -13.5 V)=43.5V, its output power reaches the maximum, that is, 43.5V*1A=43.5W. Wherein, 43.5W here is the maximum output power of the constant current LED power supply, thereby reasonably limiting the output power of the constant current LED power supply. If it is necessary to continue to reduce the maximum output power of the load, it can be achieved by appropriately reducing the voltage stabilizing value of the third diode D3.

## Claims

1. A constant current LED power supply circuit with maximum output power limiting circuit including a single-stage constant voltage power supply circuit (3), a DC-DC constant current output circuit (4), and a maximum output power limiting circuit of constant current LED power supply being connected with the single-stage constant voltage power supply circuit (3) and the DC-DC constant current output circuit (4) in the constant current LED power supply, wherein the maximum output power limiting circuit of constant current LED power supply includes a voltage stabilizing source circuit (1) for setting DC-DC output current and an output power limiting circuit (2), **characterized in that**, the output power limiting circuit (2) includes a second diode (D2) and a third diode (D3); the cathode of the second diode (D2) is used to respectively connect an output end of the DC-DC constant current output circuit (4) and the voltage input end of LED lamp; the anode of the second diode (D2) is connected to the anode of the third diode (D3), and the cathode of the third diode (D3) is connected to a first end of a first capacitor (C1) of the stabilizing source circuit (1).

2. The constant current LED power supply circuit with maximum output power limiting circuit as claimed in claim 1, wherein the voltage stabilizing source circuit (1) for setting the DC-DC output current includes a first resistor (R1), a second resistor (R2), a third resistor (R3), the first capacitor (C1), a second capacitor (C2), and a first voltage stabilizing integrated block (D1); the first end of the first resistor (R1 is connected to the output end of the single-stage constant voltage power supply circuit (3) and the input end of the DC-DC constant current output circuit (4), and the second end of the first resistor (R1) is respectively connected to the first end of the second resistor (R2), the first end of the second capacitor (C2) and the cathode of the first voltage stabilizing integrated block (D1), and the second end of the first resistor (R1) is used to connect the voltage stabilizing input end of the DC-DC constant current output circuit (4); the first end of the second resistor (R2) is connected to the first end of the first capacitor (C1), the second end of the second resistor (R2) and the second end of the second capacitor (C2) are respectively connected to the first end of the third resistor (R3); the anode of the first voltage stabilizing integrated block (D1) and the second end of the third resistor (R3) is respectively connected to the internal grounding end of the voltage stabilizing source circuit.

3. The constant current LED power supply circuit with maximum output power limiting circuit as claimed in claim 1, wherein the third diode (D3) is a zener diode.

4. The constant current LED power supply circuit with maximum output power limiting circuit as claimed in claim 1 or 2, wherein a first end of a first resistor (R1) of the limiting circuit is respectively connected to the output end of the single-stage constant voltage power supply circuit (3) and the input end of the DC-DC constant current output circuit (4); a second end of the first resistor (R1) and the cathode of a third diode (D3) are respectively connected to the voltage stabilizing input end of the DC-DC constant current output circuit (4); an output end of the DC-DC constant current output circuit (4) is connected to the first voltage input end of the LED lamp, and the other output end of the DC-DC constant current output circuit (4) is respectively connected to the cathode of a second diode (D2) and the second voltage input end of the LED lamp in the limiting circuit.

5. The constant current LED power supply circuit with maximum output power limiting circuit as claimed in claim 1 or 2 or 4, wherein the single-stage constant voltage power supply circuit (3) includes a rectifier bridge (B), an isolation transformer (TR), and a constant voltage power supply control chip (N1), and the first input end of the rectifier bridge (B) is connected to the fire line (L) of the power line through a fuse (F), and
the second input end of the rectifier bridge (B) is connected to the null line (N) of the power line, and the first output end and the second output end of the rectifier bridge (B) are respectively connected at two ends of a third capacitor (C3), and the first output end of the rectifier bridge (B) is respectively connected with a fourth capacitor (C4), a fourth resistor (R4), a fifth resistor (R5), a sixth resistor R6 and an input end of the isolation transformer (TR);
the other end of the fourth capacitor (C4) and the other end of the fourth resistor (R4) are respectively connected to the cathode of a fourth diode (D4), and the other end of the sixth resistor (R6) is connected to the drain of the first triode (Q1), and the other end of the fifth resistor (R5) is connected to the grid of the first triode (Q1), and the grid of the first triode (Q1) is connected to one end of the ninth capacitor (C9) and the third end of the constant voltage power supply control chip (N1), and the other end of the ninth capacitor (C9) is grounded; the anode of the fourth diode (D4) is respectively connected to the isolation transformer (TR) and the drain of a second triode (Q2);
the first end of the constant voltage power supply control chip (N1) is respectively connected with a sixth capacitor (C6), a seventh capacitor (C7), a seventh resistor (R7) and an eighth resistor R8, and the second end of the constant voltage power supply control chip (N1) is respectively connected with a ninth resistor (R9) and a tenth resistor (R10), the fourth end of the constant voltage power supply control chip (N1) is connected with a twelfth resistor (R12), the fifth end of the constant voltage power supply control chip (N1) is grounded, and the sixth end of the constant voltage power supply control chip (N1) is connected with a eleventh resistor (R11); the other end of the seventh resistor (R7) is connected to the source of the first triode (Q1); the eighth resistor (R8) is connected to the cathode of a sixth diode (D6), and the ninth resistor (R9) is connected to the anode of the sixth diode (D6); the other end of the eleventh resistor (R11) is connected to the grid of the second triode (Q2), and the other end of the twelfth resistor (R12) is connected with the thirteenth resistor (R13) and the source of the second triode (Q2), respectively, and the other end of the thirteenth resistor (R13) is grounded;
an output end of the isolation transformer (TR) is connected to an anode of a fifth diode (D5), a cathode of the fifth diode (D5) is connected to a fifth capacitor (C5), and the other end of the fifth capacitor (C5) is connected to the internal grounding end of the single-stage constant voltage power supply circuit, and an eighth capacitor (C8) is provided in the single-stage constant voltage power supply circuit; one end of the eighth capacitor (C8) is grounded, and the other end of the eighth capacitor (C8) is connected to the internal grounding end of the single-stage constant voltage power supply circuit.

6. The constant current LED power supply circuit with maximum output power limiting circuit as claimed in claim 1 or 2 or 4, wherein the DC-DC constant current output circuit (4) includes a DC-DC step-down control chip (N2), a third triode (Q3), a first inductor (L1), and a seventh diode (D7), a tenth capacitor (C10), a twelfth capacitor (C12), a thirteenth capacitor (C13), a fourteenth resistor (R14), a fifteenth resistor (R15), a sixteenth resistor (R16) and a seventeenth resistor (R17);
the first end of the tenth capacitor (C10) is connected to the cathode of the seventh diode (D7) and one end of the sixteenth resistor (R16), and this first end of the tenth capacitor (C10) is used to connect the first resistor (R1) in the limiting circuit, and the second end of the tenth capacitor (C10) is connected to the internal grounding end of the DC-DC constant current output circuit;
one end of the fourteenth resistor (R14) is connected to the voltage stabilizing output end of the voltage stabilizing source circuit, and the other end of the fourteenth resistor (R14) is respectively connected to one end of the fifteenth resistor (R15), one end of the twelfth capacitor (C12), and the third end of DC-DC step-down control chip (N2); the other end of the fifteenth resistor (R15), the other end of the twelfth capacitor (C12), and the fourth end of the DC-DC step-down control chip (N2) are respectively connected to the internal grounding end of the DC-DC constant current output circuit;
the first end of the DC-DC step-down control chip (N2) is connected to the cathode of the seventh diode (D7), and the second end of the DC-DC step-down control chip (N2) is connected to the other end of the sixteenth resistor (R16), the fifth end of the DC-DC step-down control chip (N2) is connected to one end of the seventh resistor (R7), the sixth end of the DC-DC step-down control chip (N2) is connected to one end of the thirteenth capacitor (C13), and the other end of the thirteenth capacitor (C13) is connected to the internal grounding end of the DC-DC constant current output circuit; the other end of the seventeenth resistor (R17) is connected to the grid of the third triode (Q3), and the source of the third triode (Q3) is connected to the internal grounding end of the DC-DC constant current output circuit; one end of the first inductor (L1) is connected to one end of the eleventh capacitor (C11), and the other end of the first inductor (L1) is connected to the drain of the third triode (Q3) and the anode of the seventh diode (D7), respectively.

## Patentansprüche

1. Konstantstrom-LED-Stromversorgungsschaltung mit einer Schaltung zur Begrenzung der maximalen Ausgangsleistung, die eine einstufige Konstantspannungs-Stromversorgungsschaltung (3), eine DC-DC-Konstantstrom-Ausgangsschaltung (4) und eine Schaltung zur Begrenzung der maximalen Ausgangsleistung der Konstantstrom-LED-Stromversorgung enthält, die mit der einstufigen Konstantspannungs-Stromversorgungsschaltung (3) und der DC-DC-Konstantstrom-Ausgangsschaltung (4) in der Konstantstrom-LED-Stromversorgung verbunden ist, wobei die Schaltung zur Begrenzung der maximalen Ausgangsleistung der Konstantstrom-LED-Stromversorgung die Spannungsstabilisierungsquellenschaltung (1) zum Einstellen des DC-DC-Ausgangsstroms und eine Ausgangsleistungsbegrenzungsschaltung (2) enthält **dadurch gekennzeichnet, dass**,
die Ausgangsleistungsbegrenzungsschaltung (2) eine zweite Diode (D2) und eine dritte Diode (D3) enthält; die Kathode der zweiten Diode (D2) verwendet wird, um jeweils ein Ausgangsende der DC-DC-Konstantstrom-Ausgangsschaltung (4) und das Spannungseingangsende der LED-Lampe zu verbinden; die Anode der zweiten Diode (D2) ist mit der Anode der dritten Diode (D3) verbunden, und die Kathode der dritten Diode (D3) ist mit einem ersten Ende eines ersten Kondensators (C1) der Spannungsstabilisierungsquellenschaltung (1) verbunden.

2. Die Konstantstrom-LED-Stromversorgungsschaltung mit einer Schaltung zur Begrenzung der maximalen Ausgangsleistung nach Anspruch 1, wobei die Spannungsstabilisierungsquellenschaltung (1) zur Einstellung des DC-DC-Ausgangsstroms einen ersten Widerstand (R1), einen zweiten Widerstand (R2), einen dritten Widerstand (R3), den ersten Kondensator (C1), einen zweiten Kondensator (C2) und einen ersten spannungsstabilisierenden integrierten Block (D1) umfasst; das erste Ende des ersten Widerstands (R1) mit dem Ausgangsende der einstufigen Konstantspannungs-Stromversorgungsschaltung (3) und dem Eingangsende der DC-DC-Konstantstrom-Ausgangsschaltung (4) verbunden ist, und das zweite Ende des ersten Widerstands (R1) jeweils mit dem ersten Ende des zweiten Widerstands (R2) verbunden ist, dem ersten Ende des zweiten Kondensators (C2) und der Kathode des ersten spannungsstabilisierenden integrierten Blocks (D1) verbunden ist, und das zweite Ende des ersten Widerstands (R1) verwendet wird, um das spannungsstabilisierende Eingangsende der DC-DC-Konstantstrom-Ausgangsschaltung (4) zu verbinden; das erste Ende des zweiten Widerstands (R2) mit dem ersten Ende des ersten Kondensators (C1) verbunden ist, das zweite Ende des zweiten Widerstands (R2) und das zweite Ende des zweiten Kondensators (C2) jeweils mit dem ersten Ende des dritten Widerstands (R3) verbunden sind; die Anode des ersten spannungsstabilisierenden integrierten Blocks (D1) und das zweite Ende des dritten Widerstands (R3) jeweils mit dem internen Erdungsende der spannungsstabilisierenden Quellenschaltung verbunden ist.

3. Die Konstantstrom-LED-Stromversorgungsschaltung mit einer Schaltung zur Begrenzung der maximalen Ausgangsleistung nach Anspruch 1, wobei die dritte Diode (D3) eine Zenerdiode ist.

4. Die Konstantstrom-LED-Stromversorgungsschaltung mit einer Schaltung zur Begrenzung der maximalen Ausgangsleistung nach Anspruch 1 oder 2, wobei ein erstes Ende eines ersten Widerstandes (R1) der Begrenzungsschaltung mit dem Ausgangsende der einstufigen Konstantspannungs-Stromversorgungsschaltung (3) bzw. dem Eingangsende der DC-DC-Konstantstrom-Ausgangsschaltung (4) verbunden ist; ein zweites Ende des ersten Widerstands (R1) und die Kathode einer dritten Diode (D3) sind jeweils mit dem spannungsstabilisierenden Eingangsende der DC-DC-Konstantstrom-Ausgangsschaltung (4) verbunden; ein Ausgangsende der DC-DC-Konstantstrom-Ausgangsschaltung (4) mit dem ersten Spannungseingangsende der LED-Lampe verbunden ist und das andere Ausgangsende der DC-DC-Konstantstrom-Ausgangsschaltung (4) jeweils mit der Kathode einer zweiten Diode (D2) und dem zweiten Spannungseingangsende der LED-Lampe in der Begrenzungsschaltung verbunden ist.

5. Die Konstantstrom-LED-Stromversorgungsschaltung mit einer Schaltung zur Begrenzung der maximalen Ausgangsleistung nach Anspruch 1 oder 2 oder 4, wobei die einstufige Konstantspannungs-Stromversorgungsschaltung (3) eine Gleichrichterbrücke (B), einen Trenntransformator (TR) und einen Konstantspannungs-Stromversorgungssteuerchip (N1) enthält und das erste Eingangsende der Gleichrichterbrücke (B) über eine Sicherung (F) mit der Feuerleitung (L) der Stromleitung verbunden ist, und das zweite Eingangsende der Gleichrichterbrücke (B) mit der Nullleitung (N) der Stromleitung verbunden ist, und das erste Ausgangsende und das zweite Ausgangsende der Gleichrichterbrücke (B) jeweils an zwei Enden eines dritten Kondensators (C3) angeschlossen sind, und das erste Ausgangsende der Gleichrichterbrücke (B) jeweils mit einem vierten Kondensator (C4), einem vierten Widerstand (R4), einem fünften Widerstand (R5), einem sechsten Widerstand R6 und einem Eingangsende des Isolationstransformators (TR) verbunden ist;
das andere Ende des vierten Kondensators (C4) und das andere Ende des vierten Widerstands (R4) jeweils mit der Kathode einer vierten Diode (D4) verbunden sind, und das andere Ende des sechsten Widerstands (R6) mit dem Drain der ersten Triode (Q1) verbunden ist, und das andere Ende des fünften Widerstandes (R5) mit dem Gitter der ersten Triode (Q1) verbunden ist, und das Gitter der ersten Triode (Q1) mit einem Ende des neunten Kondensators (C9) und dem dritten Ende des Konstantspannungs-Stromversorgungs-Steuerchips (N1) verbunden ist, und das andere Ende des neunten Kondensators (C9) geerdet ist; die Anode der vierten Diode (D4) ist mit dem Isolationstransformator (TR) bzw. dem Drain einer zweiten Triode (Q2) verbunden;
das erste Ende des Konstantspannungs-Stromversorgungssteuerchips (N1) mit einem sechsten Kondensator (C6), einem siebten Kondensator (C7), einem siebten Widerstand (R7) und einem achten Widerstand (R8) verbunden ist, und das zweite Ende des Konstantspannungs-Stromversorgungssteuerchips (N1) mit einem neunten Widerstand (R9) und einem zehnten Widerstand (R10) verbunden ist, das vierte Ende des Konstantspannungs-Stromversorgungssteuerchips (N1) mit einem zwölften Widerstand (R12) verbunden ist, das fünfte Ende des Konstantspannungs-Stromversorgungssteuerchips (N1) geerdet ist und das sechste Ende des Konstantspannungs-Stromversorgungssteuerchips (N1) mit einem elften Widerstand (R11) verbunden ist; das andere Ende des siebten Widerstands (R7) ist mit der Source der ersten Triode (Q1) verbunden; der achte Widerstand (R8) ist mit der Kathode einer sechsten Diode (D6) verbunden, und der neunte Widerstand (R9) ist mit der Anode der sechsten Diode (D6) verbunden; das andere Ende des elften Widerstands (R11) mit dem Gitter der zweiten Triode (Q2) verbunden ist, und das andere Ende des zwölften Widerstands (R12) mit dem dreizehnten Widerstand (R13) bzw. der Source der zweiten Triode (Q2) verbunden ist, und das andere Ende des dreizehnten Widerstands (R13) geerdet ist;
ein Ausgangsende des Isolationstransformators (TR) mit einer Anode einer fünften Diode (D5) verbunden ist, eine Kathode der fünften Diode (D5) mit einem fünften Kondensator (C5) verbunden ist, und das andere Ende des fünften Kondensators (C5) mit dem internen Erdungsende der einstufigen Konstantspannungs-Stromversorgungsschaltung verbunden ist, und ein achter Kondensator (C8) in der einstufigen Konstantspannungs-Stromversorgungsschaltung vorgesehen ist; ein Ende des achten Kondensators (C8) geerdet ist und das andere Ende des achten Kondensators (C8) mit dem internen Erdungsende des einstufigen Konstantspannungs-Stromversorgungskreises verbunden ist.

6. Die Konstantstrom-LED-Stromversorgungsschaltung mit einer Schaltung zur Begrenzung der maximalen Ausgangsleistung nach Anspruch 1 oder 2 oder 4, wobei die DC-DC-Konstantstrom-Ausgangsschaltung (4) einen DC-DC-Abwärtssteuerchip (N2), eine dritte Triode (Q3) eine erste Induktivität (L1) und eine siebte Diode (D7), einen zehnten Kondensator (C10), einen zwölften Kondensator (C12), einen dreizehnten Kondensator (C13), einen vierzehnten Widerstand (R14), einen fünfzehnten Widerstand (R15), einen sechzehnten Widerstand (R16) und einen siebzehnten Widerstand (R17);
das erste Ende des zehnten Kondensators (C10) mit der Kathode der siebten Diode (D7) und einem Ende des sechzehnten Widerstands (R16) verbunden ist, und dieses erste Ende des zehnten Kondensators (C10) verwendet wird, um den ersten Widerstand (R1) in der Begrenzungsschaltung anzuschließen, und das zweite Ende des zehnten Kondensators (C10) mit dem internen Erdungsende der DC-DC-Konstantstrom-Ausgangsschaltung verbunden ist;
ein Ende des vierzehnten Widerstandes (R14) mit dem spannungsstabilisierenden Ausgangsende der spannungsstabilisierenden Quellenschaltung verbunden ist, und das andere Ende des vierzehnten Widerstandes (R14) jeweils mit einem Ende des fünfzehnten Widerstandes (R15), einem Ende des zwölften Kondensators (C12) und dem dritten Ende des DC-DC-Abwärtssteuerchips (N2) verbunden ist; das andere Ende des fünfzehnten Widerstands (R15), das andere Ende des zwölften Kondensators (C12) und das vierte Ende des DC-DC-Abwärtssteuerchips (N2) jeweils mit dem internen Erdungsende der DC-DC-Konstantstrom-Ausgangsschaltung verbunden sind;
das erste Ende des DC-DC-Abwärtssteuerchips (N2) mit der Kathode der siebten Diode (D7) verbunden ist, und das zweite Ende des DC-DC-Abwärtssteuerchips (N2) mit dem anderen Ende des sechzehnten Widerstands (R16) verbunden ist, das fünfte Ende des DC-DC-Abwärtssteuerchips (N2) mit einem Ende des siebten Widerstands (R7) verbunden ist, das sechste Ende des DC-DC-Abwärtssteuerchips (N2) mit einem Ende des dreizehnten Kondensators (C13) verbunden ist und das andere Ende des dreizehnten Kondensators (C13) mit dem internen Erdungsende der DC-DC-Konstantstrom-Ausgangsschaltung verbunden ist; das andere Ende des siebzehnten Widerstands (R17) mit dem Gitter der dritten Triode (Q3) verbunden ist und die Source der dritten Triode (Q3) mit der internen Erdungsseite der DC-DC-Konstantstromausgangsschaltung verbunden ist; ein Ende der ersten Induktivität (L1) mit einem Ende des elften Kondensators (C11) verbunden ist und das andere Ende der ersten Induktivität (L1) mit dem Drain der dritten Triode (Q3) bzw. der Anode der siebten Diode (D7) verbunden ist.

## Revendications

1. Circuit d'alimentation en courant constant pour LED avec un circuit de limitation de la puissance de sortie maximale, comprenant un circuit d'alimentation en courant à tension constante à un seul étage (3), un circuit de sortie à courant constant DC-DC (4) et un circuit de limitation de la puissance de sortie maximale de l'alimentation en courant constant pour LED, connecté au circuit d'alimentation à tension constante à un seul étage (3) et au circuit de sortie à courant constant DC-DC (4) dans l'alimentation à courant constant de la LED, le circuit de limitation de la puissance de sortie maximale de l'alimentation à courant constant de la LED comprenant le circuit de source de stabilisation de tension (1) pour ajuster le courant de sortie DC-DC et un circuit de limitation de puissance de sortie (2).
**caractérisé en ce que**,
le circuit de limitation de puissance de sortie (2) comprend une deuxième diode (D2) et une troisième diode (D3) ; la cathode de la deuxième diode (D2) est utilisée pour connecter respectivement une extrémité de sortie du circuit de sortie à courant continu constant (4) et l'extrémité d'entrée de tension de la lampe LED ; l'anode de la deuxième diode (D2) est connectée à l'anode de la troisième diode (D3), et la cathode de la troisième diode (D3) est connectée à une première extrémité d'un premier condensateur (C1) du circuit de source de stabilisation de tension (1).

2. Le circuit d'alimentation en courant constant pour LED avec un circuit de limitation de la puissance de sortie maximale selon la revendication 1, dans lequel le circuit de source de stabilisation de tension (1) pour ajuster le courant de sortie DC-DC comprend une première résistance (R1), une deuxième résistance (R2), une troisième résistance (R3), le premier condensateur (C1), un deuxième condensateur (C2) et un premier bloc intégré de stabilisation de tension (D1) ; la première extrémité de la première résistance (R1) est connectée à l'extrémité de sortie du circuit d'alimentation électrique à tension constante à un étage (3) et à l'extrémité d'entrée du circuit de sortie à courant continu constant (4), et la deuxième extrémité de la première résistance (R1) est connectée à la première extrémité de la deuxième résistance (R2), respectivement, la première extrémité du deuxième condensateur (C2) et la cathode du premier bloc intégré de stabilisation de la tension (D1), et la deuxième extrémité de la première résistance (R1) est utilisée pour connecter l'extrémité d'entrée de stabilisation de la tension du circuit de sortie à courant continu constant (4) ; la première extrémité de la deuxième résistance (R2) est connectée à la première extrémité du premier condensateur (C1), la deuxième extrémité de la deuxième résistance (R2) et la deuxième extrémité du deuxième condensateur (C2) sont respectivement connectées à la première extrémité de la troisième résistance (R3) ; l'anode du premier bloc intégré de stabilisation de tension (D1) et la deuxième extrémité de la troisième résistance (R3) sont respectivement connectées à l'extrémité de mise à la terre interne du circuit source de stabilisation de tension.

3. Le circuit d'alimentation en courant constant pour LED avec un circuit de limitation de la puissance de sortie maximale selon la revendication 1, dans lequel la troisième diode (D3) est une diode Zener.

4. Le circuit d'alimentation en courant constant pour LED avec un circuit de limitation de la puissance de sortie maximale selon la revendication 1 ou 2, dans lequel une première extrémité d'une première résistance (R1) du circuit de limitation est connectée à l'extrémité de sortie du circuit d'alimentation électrique à tension constante à un étage (3) et à l'extrémité de sortie du circuit d'alimentation électrique à tension constante à deux étages (4), respectivement, une extrémité d'entrée du circuit de sortie à courant constant DC-DC (4) ; une deuxième extrémité de la première résistance (R1) et la cathode d'une troisième diode (D3) sont respectivement connectées à l'extrémité d'entrée de stabilisation de la tension du circuit de sortie à courant constant DC-DC (4) ; une extrémité de sortie du circuit de sortie à courant constant DC-DC (4) est connectée à la première extrémité d'entrée de tension de la lampe LED et l'autre extrémité de sortie du circuit de sortie à courant constant DC-DC (4) est connectée respectivement à la cathode d'une deuxième diode (D2) et à la deuxième extrémité d'entrée de tension de la lampe LED dans le circuit limiteur.

5. Le circuit d'alimentation en courant constant pour LED avec un circuit de limitation de la puissance de sortie maximale selon la revendication 1 ou 2 ou 4, dans lequel le circuit d'alimentation électrique à tension constante à un seul étage (3) comprend un pont redresseur (B), un transformateur d'isolement (TR) et une puce de commande d'alimentation électrique à tension constante (N1), et la première extrémité d'entrée du pont redresseur (B) est connectée à la ligne d'incendie (L) de la ligne d'alimentation électrique via un fusible (F), et la deuxième extrémité d'entrée du pont redresseur (B) est connectée à la ligne neutre (N) de la ligne d'alimentation, et la première extrémité de sortie et la deuxième extrémité de sortie du pont redresseur (B) sont respectivement connectées à deux extrémités d'un troisième condensateur (C3), et la première extrémité de sortie du pont redresseur (B) est respectivement connectée à un quatrième condensateur (C4), une quatrième résistance (R4), une cinquième résistance (R5), une sixième résistance R6 et une extrémité d'entrée du transformateur d'isolation (TR) ;
l'autre extrémité du quatrième condensateur (C4) et l'autre extrémité de la quatrième résistance (R4) sont respectivement connectées à la cathode d'une quatrième diode (D4), et l'autre extrémité de la sixième résistance (R6) est connectée au drain de la première triode (Q1), et l'autre extrémité de la cinquième résistance (R5) est connectée à la grille de la première triode (Q1), et la grille de la première triode (Q1) est connectée à une extrémité du neuvième condensateur (C9) et à la troisième extrémité de la puce de commande d'alimentation en courant à tension constante (N1), et l'autre extrémité du neuvième condensateur (C9) est mise à la terre ; l'anode de la quatrième diode (D4) est reliée au transformateur d'isolation (TR) ou à la le drain d'une deuxième triode (Q2) ;
la première extrémité de la puce de commande d'alimentation à tension constante (N1) est connectée à un sixième condensateur (C6), un septième condensateur (C7), une septième résistance (R7) et une huitième résistance (R8), et la deuxième extrémité de la puce de commande d'alimentation à tension constante (N1) est connectée à une neuvième résistance (R9) et une dixième résistance (R10), la quatrième extrémité de la puce de commande d'alimentation en courant à tension constante (N1) est connectée à une douzième résistance (R12), la cinquième extrémité de la puce de commande d'alimentation en courant à tension constante (N1) est mise à la terre et la sixième extrémité de la puce de commande d'alimentation en courant à tension constante (N1) est connectée à une onzième résistance (R11) ; l'autre extrémité de la septième résistance (R7) est connectée à la source de la première triode (Q1) ; la huitième résistance (R8) est connectée à la cathode d'une sixième diode (D6) et la neuvième résistance (R9) est connectée à l'anode de la sixième diode (D6) ; l'autre extrémité de la onzième résistance (R11) est connectée à la grille de la deuxième triode (Q2) et l'autre extrémité de la douzième résistance (R12) est connectée respectivement à la treizième résistance (R13) et à la troisième résistance (R14). la source de la deuxième triode (Q2), et l'autre extrémité de la treizième résistance (R13) est mise à la terre ;
une extrémité de sortie du transformateur d'isolation (TR) est connectée à une anode d'une cinquième diode (D5), une cathode de la cinquième diode (D5) est connectée à un cinquième condensateur (C5), et l'autre extrémité du cinquième condensateur (C5) est connectée à l'extrémité de mise à la terre interne du circuit d'alimentation électrique à tension constante à un étage, et un huitième condensateur (C8) est prévu dans le circuit d'alimentation électrique à tension constante à un étage ; une extrémité du huitième condensateur (C8) est mise à la terre et l'autre extrémité du huitième condensateur (C8) est connectée à l'extrémité de mise à la terre interne du circuit d'alimentation électrique à tension constante à un seul étage.

6. Le circuit d'alimentation en courant constant pour LED avec un circuit de limitation de la puissance de sortie maximale selon la revendication 1 ou 2 ou 4, le circuit de sortie à courant constant DC-DC (4) comprenant une puce de commande abaisseuse DC-DC (N2), une troisième triode (Q3), une première inductance (L1) et une septième diode (D7), un dixième condensateur (C10), un douzième condensateur (C12), un treizième condensateur (C13), une quatorzième résistance (R14), une quinzième résistance (R15), une seizième résistance (R16) et une dix-septième résistance (R17) ;
la première extrémité du dixième condensateur (C10) est connectée à la cathode de la septième diode (D7) et à une extrémité de la seizième résistance (R16), et cette première extrémité du dixième condensateur (C10) est utilisée pour connecter la première résistance (R1) dans le circuit de limitation, et la deuxième extrémité du dixième condensateur (C10) est connectée à l'extrémité de mise à la terre interne du circuit de sortie à courant continu constant ;
une extrémité de la quatorzième résistance (R14) est connectée à l'extrémité de sortie de stabilisation de tension du circuit de source de stabilisation de tension, et l'autre extrémité de la quatorzième résistance (R14) est connectée respectivement à une extrémité de la quinzième résistance (R15), à une extrémité du douzième condensateur (C12) et à la troisième extrémité de la puce de commande de liaison descendante CC-CC (N2) ; l'autre extrémité de la quinzième résistance (R15), l'autre extrémité du douzième condensateur (C12) et la quatrième extrémité de la puce de commande de liaison descendante CC-CC (N2) sont respectivement connectées à l'extrémité de mise à la terre interne du circuit de sortie CC-CC à courant constant ; la première extrémité de la puce de commande descendante CC-CC (N2) est connectée à la cathode de la septième diode (D7), et la deuxième extrémité de la puce de commande descendante CC-CC (N2) est connectée à l'autre extrémité de la seizième résistance (R16), la cinquième extrémité de la puce de commande descendante CC-CC (N2) est connectée à une extrémité de la septième résistance (R7), la sixième extrémité de la puce de commande abaisseuse DC-DC (N2) est connectée à une extrémité du treizième condensateur (C13) et l'autre extrémité du treizième condensateur (C13) est connectée à l'extrémité de mise à la terre interne du circuit de sortie DC-DC à courant constant ; l'autre extrémité de la dix-septième résistance (R17) est connectée à la grille de la troisième triode (Q3) et la source de la troisième triode (Q3) est connectée à l'extrémité interne de mise à la terre du circuit de sortie à courant continu constant ; une extrémité de la première inductance (L1) est connectée à une extrémité du onzième condensateur (C11) et l'autre extrémité de la première inductance (L1) est connectée au drain de la troisième triode (Q3) et à la source de la troisième triode (Q3), respectivement. l'anode de la septième diode (D7).
